# EUROPÄISCHE PATENTSCHRIFT

(11) **EP 0 945 174 B1**
(45) Veröffentlichungstag und Bekanntmachung des Hinweises auf die Patenterteilung: **18.02.2004**
(21) Anmeldenummer: 99104522.0
(22) Anmeldetag: 06.03.1999
(51) Int. Cl.: B01J 19/24, C01B 3/32, C01B 3/50, H01M 8/06

(54) **Reaktoreinheit für eine katalytische chemische Reaktion, insbesondere zur katalytischen Methanolreformierung**
Reactor unit for a catalytic chemical reaction, specifically for catalytic reforming of methanol
Réacteur pour une réaction chimique catalysée, spécialement pour reformage catalytique de méthanol

(30) Priorität: 25.03.1998 DE 19813053
(43) Veröffentlichungstag der Anmeldung: 29.09.1999
(73) Patentinhaber: Ballard Power Systems AG, 73230 Kirchheim / Teck-Nabern (DE)
(72) Erfinder: Poschmann, Thomas, 89073 Ulm (DE); Wieland, Steffen, 70180 Stuttgart (DE)
(74) Vertreter: Beyer, Andreas, Dr.

(56) Entgegenhaltungen:
- DE-A- 4 423 587
- GB-A- 2 283 235
- US-A- 5 674 301
- PATENT ABSTRACTS OF JAPAN vol. 015, no. 297 (C-0854), 29. Juli 1991 (1991-07-29) & JP 03 109202 A (NGK INSULATORS LTD), 9. Mai 1991 (1991-05-09)

## Beschreibung

Die Erfindung bezieht sich auf eine Reaktoreinheit nach dem Oberbegriff des Anspruchs 1.

Reaktoreinheiten zur katalytischen chemischen Umsetzung eines gasförmigen oder flüssigen Reaktionsausgangsproduktes in ein Reaktionsendprodukt, das eine gasförmige oder flüssige, mittels Membrandiffusion selektiv abtrennbare Reaktionskomponente enthält, sind beispielsweise zur Wasserdampfreformierung von Methanol in Gebrauch. Bei dieser Reaktion entsteht als Reaktionsendprodukt ein wasserstoffreiches Gemisch, das einen gewissen Anteil Kohlenmonoxid enthält. Es ist bekannt, solche Reaktoreinheiten mobil in brennstoffzellenbetriebenen Kraftfahrzeugen einzusetzen, um den für die Brennstoffzellen benötigten Wasserstoff aus flüssig mitgeführtem Methanol zu gewinnen. Da Kohlenmonoxid einen schädigenden Einfluß auf die Brennstoffzellen hat, bedarf das Reaktionsendprodukt einer entsprechenden Behandlung, wofür als eine Möglichkeit die selektive Abtrennung des Wasserstoffs mittels Membrandiffusion bekannt ist. Besonders für diesen mobilen Einsatzfall in der Fahrzeugtechnik ist es aus Dynamik- und Platzgründen wünschenswert, den Reaktor möglichst kompakt und leicht mit wenig Bauteilen bauen zu können, wobei möglichst wenig Regelungs- und Steuereinheiten zum Einsatz kommen sollen und gleichzeitig ein hoher Wirkungsgrad angestrebt wird.

In der Patentschrift US 4.981.676 ist eine Reaktoreinheit offenbart, die zur Wasserdampfreformierung eines Kohlenwasserstoffs, insbesondere von Methan, dient und einen zylinderringförmigen Reaktionsraum beinhaltet, der mit einer geeigneten Katalysatorpelletschüttung befülllt ist. Nach außen ist der Reaktionsraum von einer metallischen Wand begrenzt, die durch eine Brennereinrichtung von außen beheizbar ist, mit welcher ein zugeführtes Brennstoff/Luft-Gasgemisch mit offener Flamme verbrannt wird. Die von der Brennereinrichtung erzeugbare Wärme kann zum raschen Aufheizen des Systems bzw. zur Aufrechterhaltung einer geeigneten erhöhten Reaktionstemperatur im Fall von endotherm verlaufenden chemischen Reaktionen genutzt werden. Nach innen ist der Reaktionsraum von einem als Wasserstoffabtrennmembran wirkenden Rohr mit entsprechend poröser, keramischer Rohrwand gebildet.

Es sind auch bereits Reformierungsreaktoreinheiten vorgeschlagen worden, bei denen neben einer Wasserstoffabtrennmembran eine zur Durchführung einer katalytischen Verbrennung ausgelegte Brennereinrichtung zusammen mit dem eigentlichen Reaktionsraum in eine Baueinheit integriert ist, siehe z.B. die deutsche Patentanmeldung 197 57 506 der Anmelderin.

Aus der Patentschrift US 5.451.386 ist eine Reaktoreinheit bekannt, die ein Membranrohr mit selektiv wasserstoffdurchlässiger Wandung beinhaltet, dessen Inneres den Reaktionsraum bildet, der geeignete Katalysatorpartikel beinhaltet, um Wasserstoff beispielsweise durch katalytische Zersetzung von Ammoniak oder Schwefelwasserstoff zu gewinnen.

Membranen zur Abtrennung einer gewünschten Reaktionskomponente aus einem diese Komponente enthaltenden Stoffgemisch, insbesondere auch von Wasserstoff aus einem wasserstoffhaltigen Gemisch, sind in unterschiedlichen Bauarten und aus unterschiedlichen Materialien bestehend im Einsatz. Eine bekannte Bauform sind monolithische Trägerblöcke mit mehreren parallelen Längskanälen, die von porösen Membranwandungen begrenzt sind, welche für die gewünschte Reaktionskomponente selektiv durchlässig sind. Das Gemisch, von dem die gewünschte Reaktionskomponente abgetrennt werden soll, wird durch das Innere der Längskanäle hindurchgeleitet. Membran-Trägerblöcke dieser Art werden z.B. für Filtrations- oder Separationszwecke oder bei katalytischen chemischen Reaktionen eingesetzt, wobei in letzterem Fall das zugehörige Katalysatormaterial in das Trägerblockmaterial eindotiert sein kann, siehe die Offenlegungsschrift EP 0 154 295 A1 sowie die Patentschriften US 5 409 609 und DE 691 07 096 T2, wobei sich aus letzterer die Verwendung der dort beschriebenen Membranvorrichtung als Reaktoreinheit entnehmen lässt.

In der Offenlegungsschrift EP 0 450 872 A1 ist eine Reaktoreinheit zur Durchführung einer endothermen katalytischen Reaktion eines gasförmigen oder flüssigen Reaktionsausgangsproduktes in ein Reaktionsendprodukt beschrieben, die einen zylindrischen Reaktionsraum beinhaltet, der von einem oder mehreren, voneinander beabstandeten, sich in Zylinderlängsrichtung erstreckenden keramischen Brennerrohren durchzogen wird. In jedes Brennerrohr ist koaxial ein Brennstoffzufuhrrohr eingefügt. Der über dieses Brennstoffzufuhrrohr zugeführte Brennstoff wird im Verbrennungsrohr verbrannt.

Die DE 44 23 587 A1 offenbart einen Rohrbündelreaktor mit einem porösen Rohr, das auf seiner Innenseite mit einer Pd/Ag-Schicht versehen ist. Koaxial zu dem Rohr erstreckt sich in dessen Innenraum eine Temperierleitung, die zu Heiz- oder Kühlzwecken von einem Temperierfluid durchströmt wird. Ein zwischen dem Rohr und der Temperierleitung gebildeter Ringraum ist mit einer Katalysatorschüttung gefüllt und stellt einen Reaktionsraum dar. In dem ringförmigen Reaktionsraum entstehender Wasserstoff diffundiert durch die selektiv wasserstoffdurchlässige Pd/Ag-Beschichtung und das poröse Rohr in einen das Rohr außen umgebenden Wasserstoffabzugsraum, von wo er einer zugehörigen Elektrode einer Brennstoffzelle zugeführt wird.

Die JP 03 109 202 A beschreibt einen Reformierungsreaktor mit einem porösen Trägerblock, in dem erste, längsgerichtete Kanäle sowie zweite, längsgerichtete und von den ersten längsgerichteten Kanälen isolierte Kanäle ausgebildet sind. Die ersten oder zweiten Kanäle sind an ihrer Innenwandung mit einem Reformierungskatalysator zur Umsetzung eines Reformierungsgases beschichtet, während die zweiten oder ersten Kanäle in ihrer Innenwandung mit einem Katalysator zur katalytischen Verbrennung eines Brennstoffgases beschichtet sind.

Der Erfindung liegt als technisches Problem die Bereitstellung einer Reaktoreinheit der eingangs genannten Art zugrunde, die sich relativ kompakt und leicht bauen lässt, einen hohen Umsatzwirkungsgrad ermöglicht und eine einfache und schnelle Abfuhr einer selektiv abtrennbaren Komponente aus der Reaktoreinheit erlaubt.

Die Erfindung löst dieses Problem durch die Bereitstellung einer Reaktoreinheit mit den Merkmalen des Anspruchs 1. Diese Reaktoreinheit beinhaltet einen monolithischen Trägerblock mit mehreren parallelen Reaktionsraum-Längskanälen, in die das Reaktionsausgangsprodukt einströmbar ist und die ein geeignetes Reaktionskatalysatormaterial beinhalten und nach außen von Wandungen begrenzt sind, die als Membranen zur selektiven Abtrennung der gewünschten Reaktionskomponente vom restlichen Reaktionsendprodukt fungieren. In wenigstens einen Teil dieser Längskanäle ist eine jeweilige katalytische Brennereinrichtung eingebracht, um durch einen flammenlosen katalytischen Verbrennungsvorgang Wärme zum raschen Aufheizen des von den Längskanälen gebildeten Reaktionsraums und/oder zur Aufrechterhaltung einer zur Durchführung der gewünschten katalytischen chemischen Reaktion im Reaktionsraum ausreichend hohen Reaktionstemperatur erzeugen zu können, insbesondere für den Fall einer endothermen Reaktion.

Die Integration sowohl einer Abtrennmembran als auch einer katalytischen Brennereinrichtung in einen mit seinen Längskanälen den Reaktionsraum bildenden, monolithischen Trägerblock ermöglicht bei gegebenen Leistungsvermögen einen besonders kompakten Aufbau der Reaktoreinheit. Der Trägerblock lässt sich mit geringem Gewicht und relativ geringem Aufwand z.B. als Strangpressprofil fertigen. Der kompakte Aufbau ist günstig für ein rasches dynamisches Verhalten der Reaktoreinheit bei schwankenden Lastbedingungen, wie sie beim mobilen Einsatz in Kraftfahrzeugen vorliegen. Die Reaktoreinheit lässt sich dadurch insbesondere zur Gewinnung von Wasserstoff durch Wasserdampfreformierung von Methanol in brennstoffzellenbetriebenen Kraftfahrzeugen einsetzen.

Bei der erfindungsgemäßen Reaktoreinheit sind in den Trägerblock querverlaufende Sammelkanäle eingebracht, über welche die selektiv durch die Trägerblock-Membranwandungen hindurchdiffundierende Reaktionskomponente getrennt von den übrigen Bestandteilen des Reaktionsendprodukts in einen den Trägerblock umgebenden Sammelraum abgeführt werden kann.

Bei einer nach Anspruch 2 weitergebildeten Reaktoreinheit beinhaltet die jeweilige katalytische Brennereinrichtung ein Brennerrohr im Inneren des zugehörigen Reaktionsraum-Längskanals. Dem Brennerrohr ist innenseitig ein geeignetes Brennerkatalysatormaterial für die katalytische Verbrennung eines Brennstoffs zugeordnet, der in das Innere des Brennerrohrs eingeleitet wird. In weiterer Ausgestaltung dieser Reaktoreinheit ist das Brennerkatalysatormaterial gemäß Anspruch 3 als innenseitige Beschichtung des Brennerrohrs eingebracht.

Bei einer nach Anspruch 4 weitergebildeten Reaktoreinheit bestehen die als Abtrennmembranen fungierenden Trägerblockwandungen aus einem porösen Trägermaterial, das mit einer abtrennaktiven Beschichtung versehen ist. Letztere beinhaltet eine oder mehrere, feinporöse, abtrennselektive Kunststoff- und/oder Keramikschichtlagen und/oder eine metallische Schicht aus einem abtrennselektiven Metallmaterial. Die so realisierten Trägerblockwandungen besitzen eine hohe Selektivität für die Abtrennung der gewünschten Reaktionskomponente, z.B. von Wasserstoff aus einem wasserstoffhaltigen Reaktionsendprodukt.

Eine vorteilhafte Ausführungsform der Erfindung ist in der Zeichnung dargestellt und wird nachfolgend beschrieben. Hierbei zeigen:
- Fig. 1: eine Querschnittansicht durch eine Reaktoreinheit zur Wasserdampfreformierung von Methanol mit einem monolithischen Trägerblock,
- Fig. 2: eine schematische Perspektivansicht des Trägerblocks von Fig. 1 und
- Fig. 3: eine Längsschnittansicht eines Stirnendbereichs der Reaktoreinheit von Fig. 1 entlang der Linie III-III von Fig. 1.

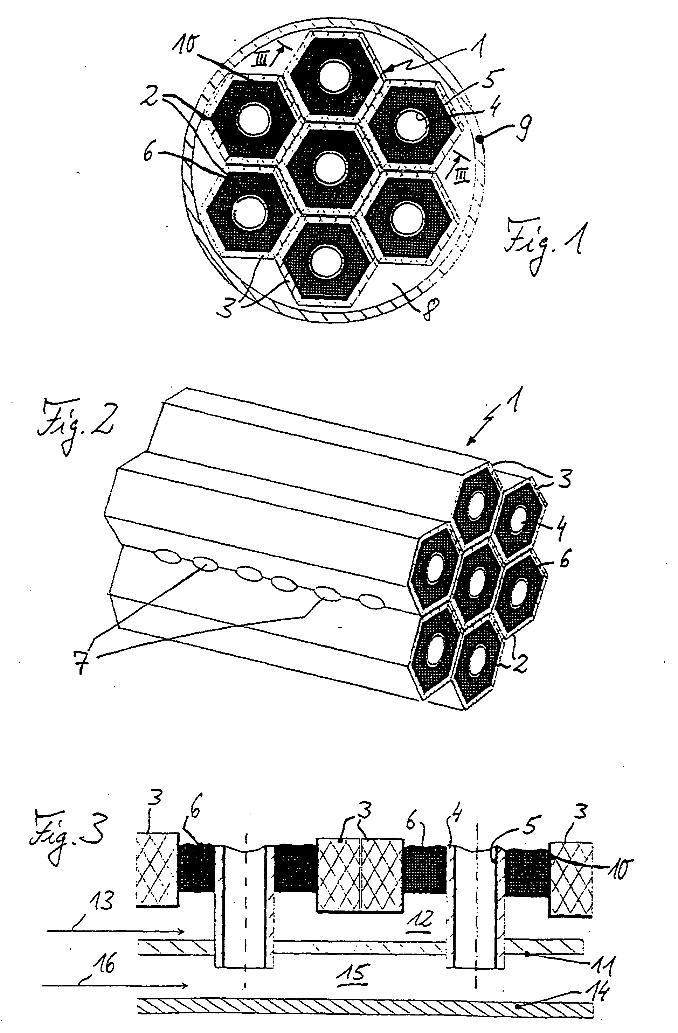

Die in den Figuren 1 bis 3 gezeigte Reaktoreinheit ist zur Wasserdampfreformierung von Methanol ausgelegt, beispielsweise für den mobilen Einsatz in einem brennstoffzellenbetriebenen Kraftfahrzeug, um dadurch den für die Brennstoffzellen benötigten Wasserstoff aus flüssig mitgeführtem Methanol zu gewinnen. Die kompakt gebaute Reaktoreinheit beinhaltet einen monolithischen Trägerblock 1 mit sieben parallelen Reaktionsraum-Längskanälen 2, die nach außen von im Querschnitt sechseckigen, wabenförmigen Trägerblockwandungen 3 begrenzt sind. Die sieben Längskanäle 2 liegen wabenförmig lückenlos mit ihren Seitenwandungen aneinander, d.h. ein mittlerer Längskanal ist mit gleichem Winkelabstand von den übrigen sechs Längskanälen umgeben. Der Trägerblock 1 kann im großtechnischen Maßstab als Strangpreßprofil gefertigt werden und läßt sich mit geringem Gewicht herstellen.

In das Innere jedes Reaktionsraum-Längskanals 2 ist koaxial ein Brennerrohr 4 eingebracht, das innenseitig mit einer Beschichtung 5 aus einem geeigneten Brennerkatalysatormaterial versehen ist und dadurch eine katalytische Brennereinrichtung für den jeweiligen Reaktionsraum-Längskanal 2 bildet. Der eigentliche Reaktionsraum, in welchem die Methanolreformierungsreaktion abläuft, setzt sich aus den sieben parallelen Ringräumen 6 zwischen dem jeweiligen Brennerrohr 4 und der Wandung 3 des zugehörigen Reaktionsraum-Längskanals 2 zusammen. Jeder dieser Reaktionsteilräume 6 ist mit einem geeigneten Katalysatormaterial befüllt, z.B. einem Cu/ZnO/Al₂O₃-Material, was in Form einer Pelletschüttung oder eines entsprechenden Katalysatorschaumkörpers realisiert sein kann. Alternativ kann das Reformierungskatalysatormaterial auch als Schicht oder Poreneinlagerung an der Innenseite der Wandungen 3 eingebracht sein.

Der monolithische Trägerblock 1 ist als poröser Block realisiert, d.h. die Wandungen 3 der Reaktionsraum-Längskanäle 2 bestehen aus einem porösen Material, z.B. aus gesinterter Keramik, Glas, Metallschaum, Kohle oder Kunststoff in poröser Form. Innenseitig sind die porösen Wandungen 3 mit einer abtrennaktiven Beschichtung 10 aus einer oder mehreren feinporösen Kunststoff- und/oder Keramiklagen versehen, die so gewählt sind, daß die Wandungen 3 insgesamt wasserstoffdurchlässig sind und dabei eine hohe Abtrennselektivität für Wasserstoff besitzen. Alternativ oder zusätzlich kann eine metallische Schichtlage für die selektiv wasserstoffabtrennaktive Beschichtung 10 vorgesehen sein, die vorzugsweise von einem oder mehreren Metallen der Gruppen IVb, Vb und VIII oder einer Legierung derselben gebildet ist. Die porösen Wandungen 3 fungieren dadurch als Membranen zur effektiven und hochselektiven Abtrennung des Wasserstoffs aus dem wasserstoffreichen Reaktionsendprodukt der Methanolreformierung.

Wie in Fig. 2 schematisch gezeigt, sind in den Trägerblock 1 Querkanäle 7 im Bereich der porösen Wandungen 3 derart eingebracht, daß sie nicht mit den reaktionsraumbildenden Ringräumen 6 der Reaktionsraum-Längskanäle 2 in Verbindung stehen. Auf diese Weise kann der im Reaktionsraum, d.h. in den Ringräumen 6, gebildete Wasserstoff über die als Abtrennmembranen wirkenden, porösen Wandungen 3 in hochreiner Form von den restlichen Bestandteilen des Reaktionsendprodukts der Methanolreformierungsreaktion abgetrennt und über die Querkanäle 7 aus dem Trägerblock 1 abgeführt werden.

Wie aus Fig. 1 ersichtlich, ist der Trägerblock 1 unter Belassung eines Wasserstoffsammelraums 8 in einen gasdichten Druckbehälter 9 der Reaktoreinheit eingebracht. Der über die Querkanäle 7 aus dem Trägerblock 1 herausströmende Wasserstoff sammelt sich somit im Sammelraum 8 und kann von dort der Reaktoreinheit entnommen und beispielsweise den Brennstoffzellen eines brennstoffzellenbetriebenen Fahrzeugs zugeführt werden.

Im Betrieb der Reaktoreinheit wird das Reaktionsausgangsgemisch, d.h. ein Wasserdampf/Methanol-Gemisch, durch die reformierungskatalysatorbefüllten Ringräume 6 hindurchgeleitet, wo die Reformierungsreaktion erfolgt, durch die ein wasserstoffreiches Reformatgas als Reaktionsendprodukt entsteht. Da es sich hierbei um eine endotherme Reaktion handelt, die nur in einem gegenüber Raumtemperatur höheren Temperaturbereich effektiv abläuft, wird den Ringräumen 6 ständig ausreichend Wärme zugeführt. Geeignete Reaktionstemperaturen liegen beispielsweise im Bereich zwischen 150°C und 650°C. Hierzu werden die katalytischen Brennereinrichtungen betrieben, indem ein geeigneter Brennstoff, beispielsweise die Abgase aus einem zugeordneten Brennstoffzellensystem oder ein Teil des durch die Methanolreformierung gebildeten Wasserstoffs, in das Innere der Brennerrohre 4 eingeleitet und dort unter der Wirkung der Brennerkatalysatorschicht 5 katalytisch flammenlos verbrannt wird. Die Brennerrohre 4 geben die erzeugte Wärme nach außen an den jeweils angrenzenden Reaktionsringraum 6 ab. Es versteht sich, daß zu diesem Zweck die Brennerrohre 4 aus einem gut wärmeleitfähigen Material gefertigt sind.

Wenn erforderlich, kann bei einem jeweiligen Start der Reaktoreinheit zunächst allein der Verbrennungsvorgang in den katalytischen Brennereinrichtungen aktiviert werden, um die Reaktionsringräume 6 rasch auf die zur Methanolreformierung geeignete Temperatur aufzuheizen, bevor dann das Wasserdampf/Methanol-Gemisch in die Reaktionsringräume 6 eingeleitet und die Reformierungsreaktion gestartet wird.

Fig. 3 zeigt ausschnittweise den einströmseitigen Stirnendbereich der Reaktoreinheit im Längsschnitt. Wie daraus ersichtlich, sind die Brennerrohre 4 in zugehörige Öffnungen einer ersten Abdeckplatte 11 eingepaßt, während der Trägerblock 1 mit den porösen Wandungen 3 und den Reformierungskatalysatorfüllungen in den Reaktionsringräumen 6 einen gewissen Abstand zu dieser ersten Abdeckplatte 11 einhält. Dadurch ist dazwischen ein Reaktionsausgangsprodukt-Verteilraum 12 gebildet, dem von außen das zu reformierende Wasserdampf/Methanol-Gemisch 13 zugeführt wird, wo es dann gleichmäßig auf die verschiedenen parallelen Reaktionsringräume 6 verteilt wird. Auf der vom Trägerblock abgewandten Seite der ersten Abdeckplatte 11 ist mit gewissem Abstand zu dieser eine zweite Abdeckplatte 14 derart angeordnet, daß zwischen den beiden Abdeckplatten 11, 14 ein Brennstoff-Verteilraum 15 gebildet ist, in welchen die Brennerrohre 4 münden. Der katalytisch zu verbrennende Brennstoff 16 wird von außen in diesen Brennstoff-Verteilraum 15 eingeleitet und gelangt von dort in die parallelen Brennerrohre 4. Ein analoges Anschlußschema ist für den austrittsseitigen Stirnendbereich der Reaktoreinheit gewählt, was nicht näher gezeigt und erläutert zu werden braucht.

Es versteht sich, daß neben dem gezeigten Beispiel weitere Realisierungen der erfindungsgemäßen Reaktoreinheit mit den genannten Vorteilen möglich sind. So kann die erfindungsgemäße Reaktoreinheit je nach Bedarf auch aus mehreren monolithischen Trägerblöcken aufgebaut sein, und der jeweilige Trägerblock kann jede beliebige Anzahl an parallelen Reaktionsraum-Längskanälen enthalten. Alternativ zur gezeigten sechseckigen Querschnittsform können die Reaktionsraum-Längskanäle von beliebig anderer Querschnittsform sein, z.B. von runder oder rechteckiger Querschnittsform. Des weiteren versteht sich, daß die erfindungsgemäße Reaktoreinheit nicht nur zur Methanolreformierung, sondern unter Benutzung des hierfür jeweils geigneten Katalysatormaterials zur Durchführung beliebiger anderer katalytischer chemischer Reaktionen verwendbar ist, mit denen ein gasförmiges oder flüssiges Reaktionsausgangsprodukt in ein Reaktionsendprodukt umgesetzt wird, das eine gasförmige oder flüssige, mittels Membrandiffusion selektiv abtrennbare Reaktionskomponente enthält und für die eine Beheizung zweckmäßig ist.

## Patentansprüche

1. Reaktoreinheit zur katalytischen chemischen Umsetzung eines gasförmigen oder flüssigen Reaktionsausgangsproduktes (13) in ein Reaktionsendprodukt, das eine gasförmige oder flüssige, mittels Membrandiffusion selektiv abtrennbare Reaktionskomponente enthält, insbesondere zur Wasserdampfreformierung von Methanol, mit
- mehreren parallelen Reaktionsraum-Längskanälen (2), in die das Reaktionsausgangsprodukt einströmbar ist, und die ein geeignetes Reaktionskatalysatormaterial beinhalten und nach außen von als Membranen zur selektiven Abtrennung der Reaktionskomponente vom restlichen Reaktionsprodukt fungierenden Wandungen (3) begrenzt sind,
**dadurch gekennzeichnet, dass** die Reaktionsraum-Längskanäle (2) in einem monolithischen Trägerblock (1) ausgebildet sind, wobei in wenigstens einen Teil der Längskanäle eine jeweilige katalytische Brennereinrichtung (4, 5) eingebracht ist, und wobei in den Trägerblock (1) querverlaufende Sammelkanäle (7) zum Abführen der durch die Membranwandungen (3) selektiv hindurchdiffundierenden Reaktionskomponente in einen den Trägerblock (1) umgebenden Sammelraum (8) eingebracht sind.

2. Reaktoreinheit nach Anspruch 1,
**dadurch gekennzeichnet, dass** die jeweilige katalytische Brennereinrichtung ein parallel im Inneren des zugehörigen Reaktionsraum-Längskanals (2) angeordnetes Brennrohr (4) beinhaltet, in welches ein katalytisch zu verbrennender Brennstoff (16) einströmbar ist und dem innenseitig ein geeignetes Brennerkatalysatormaterial (5) zugeordnet ist.

3. Reaktoreinheit nach Anspruch 2,
**dadurch gekennzeichnet, dass** das Brennerkatalysatormaterial als innenseitige Beschichtung (5) des jeweiligen Brennerrohres (4) vorliegt.

4. Reaktoreinheit nach einem der Ansprüche 1 bis 3,
**dadurch gekennzeichnet, dass** die Membranwandungen (3) des Trägerblocks (1) aus einem porösen Trägermaterial bestehen, das mit einer abtrennaktiven Beschichtung (10) versehen ist, die eine oder mehrere Schichtlagen aus einem feinporösen, abtrennselektiven Kunststoff- und/oder Keramikmaterial und/oder eine metallische Schicht aus einem abtrennselektiven Metallmaterial beinhaltet.

## Claims

1. Reactor unit for the catalytic chemical conversion of a gaseous or liquid reaction starting product (13) into a reaction end product containing a gaseous or liquid reaction component which can be separated off selectively by means of membrane diffusion, especially for the steam reforming of methanol, having
- a plurality of parallel longitudinal reaction chamber channels (2) into which the reaction starting product is able to flow and which contain a suitable reaction catalyst material and are bordered to the outside by walls (3) acting as membranes for the selective separation of the reaction component from the remainder of the reaction product,
**characterised in that** the longitudinal reaction chamber channels (2) are formed in a monolithic support block (1), a catalytic burner device (4, 5) being provided in at least a portion of each of the longitudinal channels, and transverse collection channels (7) being formed in the support block (1) for transporting the reaction component that selectively diffuses through the membrane walls (3) into a collection chamber (8) surrounding the support block (1).

2. Reactor unit according to claim 1,
**characterised in that** each catalytic burner device comprises a burner tube (4) arranged in parallel inside the associated longitudinal reaction chamber channel (2), into which burner tube (4) a fuel (16) that is to be burned catalytically is able to flow, and which burner tube (4) has on the inside an associated suitable burner catalyst material (5).

3. Reactor unit according to claim 2,
**characterised in that** the burner catalyst material is in the form of a coating (5) on the inside of the respective burner tube (4).

4. Reactor unit according to any one of claims 1 to 3,
**characterised in that** the membrane walls (3) of the support block (1) consist of a porous carrier material provided with a coating (10) that is active in terms of separation and comprises one or more layers of a finely porous plastics and/or ceramics material that is selective in terms of separation, and/or a metallic layer of a metallic material that is selective in terms of separation.

## Revendications

1. Réacteur pour la transformation chimique catalytique d'un produit initial de réaction (13) gazeux ou liquide en un produit final de réaction qui comprend un composant de réaction gazeux ou liquide et sélectivement séparable par diffusion membranaire, en particulier pour le reformage à la vapeur d'eau de méthanol, avec
- plusieurs canaux longitudinaux (2) parallèles formant une zone de réaction, dans lesquels le produit initial de réaction peut être introduit, et lesquels comprennent un matériau catalyseur de réaction approprié et sont limités vers l'extérieur par des parois (3) servant de membranes pour la séparation sélective du composant de réaction du produit de réaction restant,
**caractérisé en ce que** les canaux longitudinaux formant une zone de réaction sont conçus en un bloc support (1) monolithique, un dispositif de brûlage (4, 5) catalytique étant intégré dans au moins une partie desdits canaux longitudinaux, et des canaux collecteurs (7) transversaux étant intégrés dans le bloc support (1) pour permettre l'évacuation du composant de réaction traversant par diffusion et de manière sélective les parois membranaires (3) vers une zone de collecte (8) entourant le bloc support (1).

2. Réacteur selon la revendication 1,
**caractérisé en ce que** chaque dispositif de brûlage catalytique comprend, disposé parallèlement à l'intérieur du canal longitudinal (2) de réaction respectivement traversé, un tube de brûlage (4) dans lequel un combustible (16) à brûler par catalyse peut être introduit et auquel un matériau catalyseur (5) de brûlage approprié est associé à l'intérieur.

3. Réacteur selon la revendication 2,
**caractérisé en ce que** le matériau catalyseur de brûlage se présente sous la forme d'une couche interne (5) recouvrant le tube de brûlage (4) correspondant.

4. Réacteur selon l'une des revendications 1 à 3,
**caractérisé en ce que** les parois membranaires (3) du bloc support (1) se composent d'un matériau support poreux recouvert d'une couche (10) de séparation active qui comprend une ou plusieurs couches de revêtement constituées d'un matériau synthétique et/ou céramique à fine porosité pour la séparation sélective et/ou une couche métallique constituée d'un matériau métallique pour la séparation sélective.
